# NEW EUROPEAN PATENT SPECIFICATION

(11) **EP 0 614 418 B2**
(45) Date of publication and mention of the opposition decision: **16.04.2003**
(45) Mention of the grant of the patent: 08.07.1998
(21) Application number: 92925081.9
(22) Date of filing: 06.11.1992
(51) Int. Cl.: B44F 9/04, C04B 26/06, C04B 26/04

(54) **MINERAL-LIKE PLASTICS**
MINERALAEHNLICHE KUNSTSTOFFE
MATIERES PLASTIQUES IMITANT DES MINERAUX

(30) Priority: 07.11.1991 US 788982; 01.04.1992 WO PCT/US92/02600; 04.05.1992 US 882839
(43) Date of publication of application: 14.09.1994
(73) Proprietor: GHAHARY, Akbar, Ringwood, NJ 07456 (US)
(72) Inventor: GHAHARY, Akbar, Ringwood, NJ 07456 (US)
(74) Representative: Beresford, Keith Denis Lewis
(86) International application number: US9209502
(87) International publication number: WO93008993

(56) References cited:
- EP-A- 0 107 764
- EP-A- 0 362 884
- WO-A-91/11404
- GB-A- 855 748
- US-A- 4 085 246
- US-A- 4 159 301
- US-A- 4 433 070

## Description

### Background of the Invention

The subject invention relates generally to a method of forming a synthetic material which simulates natural substances such as stone and the like, and more particularly, to a method of preparing and manufacturing a synthetic plastic material capable of being formed into utile shapes. Of great importance are embodiments of the subject invention utilizing acrylics that may be formed to complement coatings such as GRANICOAT™ manufactured by Safas Corporation.

There currently exists a great need for synthetic materials which mimic the appearance of natural stone, and in particular granite. Such materials are commonly used in the manufacture of flooring, tiles, counter tops, sinks, architectural accoutrements, ornamental objects, and for other purposes for which natural materials are used.

Today's acrylics are commonly available in dear or solid colors, although several marbleized varieties are now on the market. Although the subject invention is primarily directed to acrylic compositions, it may be utilized in any application where a thermoplastic material is required. Such applications include, but are not limited to thermoforming, injection molding, blow molding. extrusion, etc.

The subject acrylics may be used in any application served by conventional acrylics. Such applications include, but not limited to, situations requiring low electrical conductivity, good arc resistance and dielectric strength, and the ability to resist alkali, non-oxidizing acids, aliphatic hydrocarbons, saltwater, photographic and battery solutions, and a wide variety of commercial products and food stuffs. In particular, these acrylics go hand-in-hand with coatings such as GRANICOAT™ to span the spectrum of applications for granite-like plastics.

The prior art is replete with attempts at producing a synthetic material which is natural is appearance. One such product is that described by Ross, et al., U.S. Patent No. 4.433.070, issued February 21, 1984 (reexamination certificate issued February 10, 1987). Ross, et al. teach cultured onyx, cultured marble and like mineral-mimicking products. These products are formed from a discontinuous phase comprising a synthetic organic resin portion hardened to a predetermined hardness and a visually distinguishable continuous phase comprising a synthetic organic resin portion separately hardened to a predetermined hardness. The discontinuous phase is intimately distributed to form a marble-like appearance. Since the appearance of onyx and marble is swirled as opposed to suspended, as with granite, Ross, et al. did not have to address the problem of evenly suspending particles within a matrix. Accordingly, Ross, et al. do not teach or suggest creating particulates having the same relative density as the liquid matrix in which they are suspended. Moreover, since the Ross, et al. invention deals only with molded thermoset plastic products, as opposed to thermoformed products, it is not necessary for the product to have two phases with similar physical characteristics (except for that of hardness). Lastly, since onyx has a translucent striation and veining, the blurring of the matrix by the dissolution of the first hardened resin is not critical.

Baskin, U.S. Patent No. 5,055,327, issued October 8, 1991, teaches a cast simulated-stone containing flattened globules of overfilled, cured resin. The flattened globules substitute for natural stone chip additives and are formed by mixing a filler with a catalyzed liquid resin composition. Since the Baskin invention relates to compacting globules within a translucent matrix layer, Baskin did not have to address the problem of the globules coming out of suspension and does not teach or suggest utilizing particulates having the same relative density as the liquid matrix.

Buser, et al., U.S. Patent Nos. 4,085,246 and 4,159,307, issued April 18, 1978 and June 26, 1979, respectively, describe a simulated granite and methods for its preparation. Buser, et al. use an acrylic polymer and at least one microscopic filler which surrounds a multiplicity of macroscopic opaque particles. Although Buser, et al. address the problem of preventing particles from settling too quickly in the liquid matrix, they do not teach or suggest the use of a thermoset and thermoplastic material to form particulates.

The subject simulated mineral has physical characteristics which enable it to be used both in a pelletized form (i.e., in all thermoplastic applications), while at the same time being suitable for thermoforming. Accordingly, the subject compositions and methods represent an advance in multicolor plastic technology.

GB-A-855 748, published December 7, 1960, disdoses thermoplastic composition which are coloured by the addition of particulates of thermosetting resins containing pigments and other colorants.

The invention provides a simulated mineral composition as defined in claim 1 of the accompanying claims and a method of preparing simulated mineral articles as defined in claim 9.

### Detailed Description of the Invention

This section details various preferred embodiments of the subject invention. These embodiments are set forth to illustrate the subject invention, but are not to be construed as limiting. A broad array of plastic compositions suitable for use in forming simulated mineral artides and methods of manufacture are described. Common to each of these plastic materials is the suspension of a thermoset resin plastics material within a thermoplastic matrix, the thermoset resin plastics material and the thermoplastic matrix being substantially immiscible. The term "substantially immiscible" means that the particulate material and the matrix do not visibly dissolve or bleed color into each other.

As used throughout the application, the term thermoplastics has the generally accepted meaning in the art and includes, but is not limited to, ABS (polymers produced by polymerizing acrylonitrile, butadiene and styrene), ACS (polymers of polymerized acrylonitrile. chlorinated polyethylene and styrene), olefin-modified styrene-acrylonitrile, acetal homopolymer, acetal copolymer, ionomers, nitrile resins, phenylene-based resins. polyamine-imide, modified polyphenylene ether, polybutylene, polycarbonate, aromatic polyester, thermoplastic polyester (e.g., polybutylene terephthalate, polytetramethylene terephthalate or polyethylene terephtlalate). polypropylene, polyetheretherketone. polyetherimide, ethylene acid copolymer, ethylene-ethyl acrylate, ethylene-methyl acrylate. ethylene-vinyl acetate, polyimide, polymethylpentene, polyphenylene sulfide, nylon, acrylic, polyethylene, etc. and combinations thereof. Thermoset plastics are plastics requiring a chemical additive to cause a state conversion of the plastic from liquid to solid. Such thermoset plastics include, but are not limited to, allyl esters, aminoresins, furan polymers, phenolic resins, unsaturated alkyd polyester, unsaturated polyester, epoxies and melamine.

Since this patent application is not a primer on forming and handling of plastics, basic concepts known to those skilled in the art have not been set forth in detail. Concepts such as choosing a proper solvent or amount are readily determinable by those skilled in the art. Attention is directed to Modern Plastics Encyclopedia which is published annually by McGraw-Hill Inc. in which temperatures, choice of solvents, curing agents, etc. are set forth in detail. The text of Modern Plastics Encyclopedia, all volumes, is herein incorporated by reference.

The subject synthetic minerals typically use two resins which are mixed. For convenience, these resins are at times identified as Resin A and Resin B.

The simulated mineral composition of the present invention comprises a particulate thermoset material (Resin B) suspended within a thermoplastic material matrix (Resin A). Resin B being visually differentiable from and substantially immiscible in thermoplastic Resin A. The particulate thermoset Resin B also contains filler in a concentration adjusted to provide the particulate thermoset material with a density substantially equal to that of the thermoplastic material matrix. The simulated mineral articles are prepared by separately preparing the solid particulate of thermoset material and inorganic filler and then adding the resulting product in particulate form to thermoplastic material in liquid form in a manner to obtain a uniform distribution of the particulate in the matrix

Resin A and Resin B should be of contrasting colors or shades and, at the time of mixing. Resin A should be a liquid (not yet polymerized, or alternatively, melted). Recently, combinations of a thermoplastic Resin A with a thermoset Resin B have been found particularly useful in tiles.

Resin A and Resin B should have substantially identical or very similar physical properties, but Resin E should comprise a thermoset plastic.

Because solid Resin B has the same specific gravity as liquid Resin A, Resin B remains in suspension.

To illustrate the subject invention, the use of acrylics will now be highlighted. Acrylics have the advantage of being usable in various types of molding, as well as in thermoforming. Moreover, acrylics are particularly suited to production of translucent materials for use in lighting fixtures or sign manufacturing, which complement coatings such as GRANICOAT™.

The subject invention expands the spectrum of color variations for acrylics and represents an augmentation in the scope of applications for which acrylic is useful, especially with respect to mimicking polychromatic minerals. As used herein, acrylics comprise a broad array of polymers and co-polymers belonging to the acrylate and methacrylate families of esters. These may be used singularly or in combination, as well as with functionally substituted derivatives or other monomers to give products ranging from soft, flexible elastomers to hard, stiff plastics and thermosets, and from highly polar to deophilic resins.

Although the alkyl groups of the acrylic monomers may range from 1-18 carbon atoms, they are preferably from 1-4 carbon atoms in length. Suitable acrylic monomers include, but are not limited to, methyl and ethyl acrylates and methacrylates, n-propyl and i-propyl acrylates and methacrylates; n-butyl, 2-butyl, i-butyl, t-butyl acrylates and methacrylates; 2-ethylhexyl acrylate and methacrylate; cyclohexyl acrylate and methacrylate; ω-hydroxyalkyl acrylates and methacrylates; N-(t-butyl)aminoethyl acrylate and methacrylate; etc. Unsaturated monomers useful in the subject invention include bis-(β-chloroethyl) vinylphosphonate: styrene; vinyl acetate; acrylonitrile; methacrylonitrile; acrylic and methacrylic acids; 2-vinyl-and 4-vinylpyridines; maleic acid; maleic anhydride and esters of maleic acid: acryl amide and methacrylamide; itaconic acid, itaconic anhydride and esters of itaconic acid and multifunctional monomers for cross linking purposes such as unsaturated polyesters; alkylene diacrylates and dimethacrylates; allylacrylate and methacrylate; N-hydroxymethylacrylamide and N-hydroxymethylmethacrylamide; N,N'-methylene diacrylamide and dimethacrylamide; glycidyl acrylate and methacrylate; diallyl phthalate; divinylbenzene; divinyltoluene; trimethanolpropane triacrylate acrylate and trimethacrylate; pentaerythritol tetraacrylate and tetramethacrylate; triallylcitrate and triallylcyanurate.

Of particular concern to the subject invention, is the family of hard plastics derived from methyl methacrylate. It is to be understood that the subject acrylics may be produced in any form known to those skilled in the art. Typically, however, these acrylics will be sold as molding pellets or sheets. Pellets can be molded or extruded in conventional equipment capable of delivering melt to the nozzle at high pressure (typically greater than 10.000 p.s.i.).

To obtain a granite-like cast acrylic. Resin A (an acrylic) is mixed with a Resin B (a particulate made of a thermoset material that cannot be dissolved by the solvent present in Resin A). Resin A is preferably dear or translucent, although it may approach opaque. Resin B is preferably cured and ground to different sizes to aid in suspension and the creation of a three-dimensional look, the sizes and shapes of the grind being determined by design requirements.

Although it might appear simple to suspend solid particulates (Resin B) within a matrix, the chemical properties of thermoplastics create many problems. To suspend particulates within a matrix, the subject invention utilizes particulates which have the same specific gravity as the liquid matrix. Once the particulates are suspended, there is no gravitational reason for them to precipitate or levitate out of solution.

Resin B particulates should have substantially the same (isopycnic) specific gravity and density as that of Resin A in the melted or liquid form. To achieve this, the specific gravity of Resin A must be measured. Adjustments can then be made in the formulation of Resin B by adding low or high weight filler to Resin B. Pigment should also be added to Resin B to distinguish it from Resin A.

Such materials are typically ground to a fine mesh. Preferably, this ground material is not lower than 150 micron (100 U.S. mesh) and not higher than 1410 micron (14 U.S. mesh). Particles of this size can pass through injection nozzles and gates without dogging.

Granite-like particulates may also be mixed within an extrusion machine using a conventional dear acrylic. In such applications, a mixture of from about 50% to about 98% by weight dear acrylic is mixed with from about 2% to about 50% by weight particulates. However, in the preferred commercially envisioned extrusion applications, the dear thermoplastic and the particulates may be premixed and sold as pellets. In cell casting applications, particulates (typically 1-50% by weight) may be sold as an additive filler to be added to liquid methyl methacrylate.

Fillers useful in the subject invention include, but are not limited to, magnesium hydroxide, alumina trihydrate (ATH), powdered quartz, powdered glass, silica, powdered calcium carbonate, wood flour, diatomaceous earth, gypsum, clay minerals such as china day, illite, montmorillonite. bentonite and pyrophyllite, powdered chalk, marble and limestone, aluminum stearate, mullite calcium silicate, anhydrite, boracite and borax. One filler which has been found to be particularly useful is miniature glass bubbles (spheres). These small glass bubbles have a low relative density by virtue of the air trapped within and are readily introduced into a molten plastic composition. Other desirable fillers include ATH which has a desired density as well as fire retardancy and fumed silica which has a relatively low density.

The second problem overcome by the subject invention is that ol the liquid matrix (Resin A) dissolving the particulates (Resin B), thus leading to a clouded and blurred matrix. The subject invention overcomes this problem by employing an immiscible
thermoset plastic to form the particulates. The combination of a thermoplastic and a thermoset plastic has been found particularly useful since it overcomes non-uniform molding characteristics obtained when using mixed particulates and matrix (i.e., when the matrix and the particulates are formed of different plastics).

For example, if a matrix is to have a dynamic viscosity of 4.000 centipoise, then the particulates must have an equivalent specific gravity. The dynamic viscosity of the matrix and the specific gravity of the particulates are readily determinable by one skilled in the art. As is well known, a balance must be maintained to minimize trapped air and shrinkage of the plastic. A low viscosity plastic will tend to shrink due to the high solvent content, whereas a high viscosity plastic will tend to have problems with included air.

One suitable acrylic consists of:
Resin B particulates
2-50% by weight
Methyl methylacrylate monomer
50-98% by weight

Although this is a preferred composition, variations due to the inclusion of additional constituents are acceptable.

In an application of the subject invention suitable for injection molding, blow molding, extrusion, etc., pellets with granite-like qualities are formed.

The following formulation is particularly effective for use in forming pellets for plastic processing machinery:
Resin B particulates
2-50% by weight
Resin A (any thermoplastic)
50-98% by weight

### RESIN B

Plastics used in Resin A normally have melting temperatures of from a minimum of about 82°C (180°F) to a maximum of about 482°C (900°F) before polymerization of the solvents and monomers that could dissolve Resin B. Therefore, Resin B should have the following properties:
1. Substantially the same specific gravity as Resin A.
2. No melting point (thermoset).
3. Immiscible in the monomer available in Resin A.
4. Visually distinguishable from Resin A.

### Example 1

45 kg (100 lbs.) of Resin B was prepared using the following formulation to make an acrylic sheet with a granite-like appearance (similar to DUPONT LUCITE or ICI PLEXIGLASS):
- 40 kg (90 Ibs) (90%): Unsaturated flexible molding resin (Reichold's unpromoted 32-336) with 500 cps viscosity was chosen with 180°F heat distortion,
- 2.7 kg (6 lbs) (6%): Filler - 3M glass bubbles
- 1.36 kg (3 lbs) (3%): Pigment
- 0.45 kg (1 lbs) (1%): Catalyst
This material was mixed, transferred to a closed mold and placed in the oven for a one hour (1) at 149°C (300°F). The cured material was removed from the mold and crushed in granulating machinery to particulates not larger than 0.63 cm (1/4") in diameter. Granulated material was transferred to pulverizing machinery to create various sized particles to be suspended in Resin A. Pulverized material was transferred to classification machinery to sort and segregate the various sized particles. and eliminating any particles not retaining on U.S. Mesh 140 (103 micron). Particles finer than 103 micron (U.S. Mesh 140) tend to increase the viscosity and change color in the final composition.

The classification process is important in obtaining the right color match, consistency control from batch to batch and distribution. The various sizes will be blended together based on the formulation. A typical distribution for the thermoplastic pellets is as follows:

### Example 2

| U.S. Mesh | |
|---|---|
| 16-30 | 30% (1191-594 microns) |
| 30- 50 | 30% (594-297 microns) |
| 50- 80 | 20% (297-178 microns) |
| 80-140 | 20% (178-103 microns) |

### Example 3

| U.S. Mesh | |
|---|---|
| 25-50 | 20% (706-297 microns) |
| 50-80 | 50% (297-178 microns) |
| 80-100 | 20% (178-150 microns) |
| 100-140 | 10% (150-103 microns) |

### Example 4

| U.S. Mesh | |
|---|---|
| 10-12 | 10% (2000-1680 microns) |
| 12-16 | 10% (1680-1191 microns) |
| 16- 20 | 30% (1191-864 microns) |
| 20- 40 | 10% (864-420 microns) |
| 40-50 | 20% (420-297 microns) |
| 50- 80 | 10% (297-178 microns) |
| 80-100 | 10% 178-150 microns) |

The pulverized material was transferred to open metal trays passing through a conveyor oven 60°C (150 °F) for three (3) hours for post-curing and evaporation of any solvent or catalyst from cured and pulverized material.

### CELL CASTING OF ACRYLIC

### Example A

Two pieces of 138 cm x 138 cm (4' x 4') of tempered glass were used as a mold having a collapsible rubber gasket (seal) with two dozen spring clamps. MMA monomer (methyl methacrylate), 3.6 kg (8 lbs.), partially polymerized to a 1,000 cps viscosity syrup was mixed with 226 g (1/2 lb). finely pulverized pre-cast clear acrylic powder to increase viscosity of the acrylic syrup to that of Resin B. Resin B. 680 g (1½ lbs.) was added to the matrix (Resin A) and a catalyst was added for curing purposes. The rubber gasket was placed between two pieces of glass around the edge, held together with spring clamps creating 0.63 cm (1/4") (thickness of rubber gasket) cavity between the two piece glass. The mixture of Resin A, Resin B and catalyst was transferred into the cavity of the glass cell. The glass cell was held in a vertical position with the completion of the material transferring. The opening in the mold was sealed and the glass cell was placed in a water bath of a temperature of 93°C (200°F). The glass cell was removed from the water after the material had completely cured. Clamps and glass were removed yielding a cast acrylic sheet having a dear background and a magnificent granite effect showing uniform distribution of Resin B within the matrix. This piece of acrylic was transferred to a thermoforming press with a mold to create a dome for light fixtures. The size of the dome was 91 cm (36") diameter and 57 cm (20") in depth. The material was then heated to approximately 177°C (350°F) to be softened and placed under a vacuuming machine holding a dome shaped mold. Casted granite-like acrylic sheet was formed under vacuum in approximately ninety (90) seconds and was cooled by compressed air before removal from mold. Edges of the domed shaped granite-like acrylic were trimmed and a chandelier fixture was created.

### Example B

Three different colors of Resin B were made by the described technique. Resin B granules of various colors, 2.3 kg (5 lbs.), were added to 5 lbs. of polypropylene pellets and placed in a hopper. The material was blended inside the hopper for uniform dispersion and transferred to a feeder supplying this blend to a twin screw extrusion machine. Polypropylene was melted inside the barrel of the machine and blended uniformly with color particles of Resin B. Resin B was softened by the low heat distortion temperature without breaking down or scratching the interior of the barrel. Mixed melted polypropylene with Resin B was pushed through the extrusion head. Long, narrow rods were automatically cut with knives before falling into a bath of cold water. Pellets created in this manner had a 50% concentration of both Resin A and Resin B that could be used in molding various articles. In this example, 4.5 kg (10 lbs.) of concentrated pellets were mixed with 14 kg (30 lbs.) of polypropylene resin in pellet form and fed into an injection molding machine holding a steel mold for a planter.

The formulation of 25% concentrated pellet and 75% resin yielded a 87½% matrix to 12½% granule ratio (Resin B). This material was injected into the planter mold, producing flower pots with granite-like look affect.

## Claims

1. A simulated mineral composition which comprises a particulate thermoset resin plastics material suspended within a thermoplastic matrix, the thermoset resin plastics material and the thermoplastic matrix being visually differentiable and substantially immiscible, the thermoset resin plastics material containing a filler in a concentration adjusted to provide substantially equal densities for the thermoset resin plastics materials containing filler and the thermoplastic matrix.

2. The composition of claim 1, wherein the matrix comprises an acrylic resin.

3. The composition of either preceding claim, wherein the particulate thermoset resin plastics material is comprised of particles all of size not less than 103 µm (US Mesh 140).

4. The composition of claim 3, wherein the filler in the thermoset resin plastics material is selected from the group consisting of glass, quartz, silica, clay minerals, gypsum, chalk, aluminum trihydrate, magnesium hydroxide, calcium carbonate, marble, limestone and calcium silicate.

5. The composition of claim 4, wherein the matrix comprises an acrylic resin and the filler comprises aluminum trihydrate.

6. The composition of claim 4, wherein the matrix comprises an acrylic resin and the filler comprises glass in the form of miniature spheres.

7. The composition of claim 4, wherein the matrix comprises an acrylic resin and the filler comprises silica.

8. The composition of claim 1, wherein the thermoplastic matrix comprises about 50 to 98% by weight of the composition.

9. Method of preparing simulated mineral articles which comprises:
(a) preparing liquid thermoplastic resin,
(b) separately preparing solid particulates of a thermoset resin plastics material and an inorganic filler such that the particulates have substantially the same density as the liquid thermoplastic resin,
(c) mixing the particulates with the liquid thermoplastic resin to form a suspension, and
(d) forming the suspension into an article.

## Patentansprüche

1. Einem Mineral nachgebildete Zusammensetzung, die ein in einer thermoplastischen Matrix suspendiertes teilchenförmiges duroplastisches Harzkunststoffmaterial aufweist, wobei das duroplastische Harzkunststoffmaterial und die thermoplastische Matrix visuell unterscheidbar und im wesentlichen nicht mischbar sind, wobei das duroplastische Harzkunststoffmaterial einen Füllstoff in einer Konzentration aufweist, die eingestellt ist, um im wesentlichen gleiche Dichten für die Füllstoff enthaltenden duroplastischen Harzkunststoffmaterialien und die thermoplastische Matrix zu schaffen.

2. Zusammensetzung nach Anspruch 1, in der die Matrix ein Akrylharz umfaßt.

3. Zusammensetzung nach einem der vorangehenden Ansprüche, in der das teilchenförmige duroplastische Harzkunststoffmaterial aus Teilchen besteht, die alle eine Größe von nicht weniger als 103 µm (US Mesh 140) haben.

4. Zusammensetzung nach Anspruch 3, in der der Füllstoff im duroplastischen Harzkunstoffmaterial aus der Gruppe ausgewählt ist, die aus Glas, Quarz, Siliziumdioxid, Tonmineralien, Gips, Kalk, Aluminiumhydroxid, Magnesiumhydroxid, Kalziumcarbonat, Marmor, Kalkstein und Kalziumsilikat besteht.

5. Zusammensetzung nach Anspruch 4, in der die Matrix ein Akrylharz umfaßt und der Füllstoff Aluminiumhydroxid umfaßt.

6. Zusammensetzung nach Anspruch 4, in der die Matrix ein Akrylharz umfaßt und der Füllstoff Glas in Form von Miniaturkugeln umfaßt.

7. Zusammensetzung nach Anspruch 4, bei der die Matrix ein Akrylharz umfaßt und der Füllstoff Siliziumdioxid umfaßt.

8. Zusammensetzung nach Anspruch 1, in der die thermoplastische Matrix ungefähr 50 - 98 Gewichtsprozent der Zusammensetzung umfaßt.

9. Verfahren zur Herstellung von Mineral nachgebildeten Gegenständen, das umfaßt:
a) Herstellen des flüssigen thermoplastischen Herzes,
b) getrenntes Herstellen fester Teilchen eines duroplastischen Harzkunststoffmaterials und eines anorganischen Füllstoffs, so daß die Teilchen im wesentlichen die selbe Dichte haben wie das flüssige thermoplastische Harz,
c) Mischen der Teilchen mit dem flüssigen thermoplastischen Harz, um eine Suspension zu bilden, und
d) Formen der Suspension zu einem Gegenstand.

## Revendications

1. Une composition minérale simulée qui comprend une matière plastique consistant en une résine thermodurcie particulaire en suspension dans une matrice thermoplastique, lesdites matière plastique consistant en une résine thermodurcie et matrice thermoplastique étant différenciables du point de vue visuel et pratiquement immiscibles et la matière plastique consistant en une résine thermodurcie contenant une charge en une concentration ajustée pour conduire à des densités pratiquement égales de la matière plastique consistant en une résine thermodurcie et de la matrice thermoplastique.

2. La composition selon la revendication 1, dans laquelle la matrice comprend une résine acrylique.

3. La composition selon la revendication 1 ou 2 dans laquelle la matière plastique consistant en une résine thermodurcie particulaire est formée de particules toutes d'une dimension non inférieure à 103 µM 140 US mesh.

4. La composition selon l'une quelconque des revendications précédentes, dans laquelle la charge est choisie parmi les matériaux du groupe consistant en verre, quartz, silice, argiles minérales, gypse, craie, trihydrate d'aluminium, hydroxyde de magnésium, carbonate de calcium, marbre, chaux et silicate de calcium.

5. La composition selon la revendication 4, dans laquelle la matrice comprend une résine acrylique et la charge comprend du trihydrate d'aluminium.

6. La composition selon la revendication 4, dans laquelle la matrice comprend une résine acrylique et la charge comprend du verre sous forme de sphères minuscules.

7. La composition selon la revendication 4, dans laquelle la matrice comprend une résine acrylique et la charge comprend de la silice.

8. La composition selon l'une quelconque des revendications précédentes, dans laquelle la matrice thermoplastique forme d'environ 50 à 98 % en poids de la composition.

9. rocédé de préparation d'articles en matière minérale simulée qui comprend:
(a) la préparation d'une résine thermoplastique liquide;
(b) la préparation, à part, de particules solides d'une matière plastique consistant en une résine thermodurcie et d'une charge inorganique de façon que les particules aient pratiquement la même densité que la résine thermoplastique liquide;
(c) le mélange des particules avec la résine thermoplastique liquide pour former une suspension; et
(d) la transformation de la suspension en ledit article.
